# EUROPEAN PATENT SPECIFICATION

(11) **EP 3 945 394 B1**
(45) Date of publication and mention of the grant of the patent: **28.08.2024**
(21) Application number: 21186869.0
(22) Date of filing: 21.07.2021
(51) Int. Cl.: G05D 1/00

(54) **SYSTEM/METHOD FOR INDOOR VEHICLE COLLISION PREVENTION**
SYSTEM/VERFAHREN ZUR VERHINDERUNG VON FAHRZEUGKOLLISIONEN IN INNENRÄUMEN
SYSTÈME/PROCÉDÉ DE PRÉVENTION DE COLLISIONS ENTRE VÉHICULES EN INTÉRIEUR

(30) Priority: 29.07.2020 US 202063058484 P; 11.12.2020 US 202017119121
(43) Date of publication of application: 02.02.2022
(73) Proprietor: HERE Global B.V., 5611 ZT Eindhoven (NL)
(72) Inventor: XU, Jingwei, Buffalo Grove (US); GUAN, Yuxin, Chicago (US)
(74) Representative: Potter Clarkson

(56) References cited:
- WO-A1-2017/176550
- US-A1- 2018 122 245
- US-A1- 2019 063 947
- US-A1- 2020 242 934

## Description

### CROSS-REFERENCE TO RELATED APPLICATIONS

### TECHNICAL FIELD

This disclosure is generally directed to location tracking. More specifically, this disclosure is directed to a system and method for prevention of indoor vehicle collisions using location information.

### BACKGROUND

Recently, automotive manufacturers, IT companies, and others have been investing heavily in research and development of autonomous driving vehicles. It is quite possible that millions of autonomous driving vehicles will operate on public roads in the next few years. While such technology will provide great benefits to many, it is possible that this technology may also cause challenges, such as with respect to automated parking in cities and rural areas. For example, in enclosed or underground parking structures, it can be difficult or impossible for global navigation satellite system (GNSS) technology to provide positioning services to a vehicle.

US2018122245A1 discloses methods and systems for vehicles configured for performing a self-parking operation without a human operator. The self-parking location may include a plurality of sensors, each of the sensors being associated to physical locations in the self-parking location, and selected ones of the sensors monitoring a volume of space to detect changes.

### SUMMARY

This disclosure relates to a system and method for prevention of indoor vehicle collisions using location information.

In a first embodiment, a method includes determining identification information of a vehicle entering a space within a structure or building. The method also includes determining an expected route of the vehicle within the space. The method also includes determining venue map data corresponding to the expected route, the venue map data indicating one or more safety devices disposed at one or more locations along or near the expected route. The method also includes repeatedly tracking a current location of the vehicle as the vehicle moves within the space. The method also includes, in response to determining that the vehicle is in proximity to a first safety device of the one or more safety devices, instructing the first safety device to emit an alert.

In a second embodiment, a system includes at least one memory configured to store instructions and at least one processor coupled to the at least one memory. The at least one processor is configured when executing the instructions to determine identification information of a vehicle entering a space within a structure or building. The at least one processor is also configured when executing the instructions to determine an expected route of the vehicle within the space. The at least one processor is also configured when executing the instructions to determine venue map data corresponding to the expected route, the venue map data indicating one or more safety devices disposed at one or more locations along or near the expected route. The at least one processor is also configured when executing the instructions to repeatedly track a current location of the vehicle as the vehicle moves within the space. The at least one processor is also configured when executing the instructions to, in response to determining that the vehicle is in proximity to a first safety device of the one or more safety devices, instruct the first safety device to emit an alert.

In a third embodiment, a non-transitory computer readable medium contains instructions that when executed cause at least one processor to determine identification information of a vehicle entering a space within a structure or building; determine an expected route of the vehicle within the space; determine venue map data corresponding to the expected route, the venue map data indicating one or more safety devices disposed at one or more locations along or near the expected route; repeatedly track a current location of the vehicle as the vehicle moves within the space; and in response to determining that the vehicle is in proximity to a first safety device of the one or more safety devices, instruct the first safety device to emit an alert.

Other technical features may be readily apparent to one skilled in the art from the following figures, descriptions, and claims.

### BRIEF DESCRIPTION OF THE DRAWINGS

For a more complete understanding, reference is now made to the following description taken in conjunction with the accompanying drawings in which:
FIG. 1 illustrates an example system for use in the prevention of indoor vehicle collisions;
FIG. 2 illustrates an example device for use in the prevention of indoor vehicle collisions;
FIG. 3 illustrates an example environment in which techniques for the prevention of indoor vehicle collisions can be used according to this disclosure;
FIGS. 4A and 4B illustrate additional details of an enclosed space shown in FIG. 3 according to this disclosure;
FIG. 5 illustrates an example method for preventing indoor vehicle collisions according to this disclosure; and
FIG. 6 illustrates an example method for generating an alert in response to vehicle movement according to this disclosure.

### DETAILED DESCRIPTION

As discussed above, the increased presence of autonomous driving vehicles may cause challenges, such as with respect to automated parking. For example, in enclosed, indoor, or underground parking structures, it can be difficult or impossible for global navigation satellite system (GNSS) technology to provide positioning services to a vehicle. In addition, some autonomous vehicles that operate primarily in an indoor environment (e.g., warehouse robots) may not be capable of communicating using GNSS protocols. Nevertheless, many of the indoor environments in which the autonomous vehicles operate have locations (e.g., corners, intersections, blind spots, and the like) where vehicle and human safety is a significant concern.

Some technologies other than GNSS exist for sharing location information with a vehicle. For example, some systems use beacon technology (e.g., Wi-Fi, small cell, infrared sensor, loop sensor, and the like), cameras, lighting technology, and the like, for indoor positioning of vehicles. However, such vehicles are required to have one or more transceivers (e.g., a cellular modem) installed to communicate with the backbone network in order to share map and parking data. In general, the communication channel does not operate in broadcasting mode. Other wireless technologies or systems for indoor positioning services include Wi-Fi-based positioning system (WPS), Bluetooth, location indexing using tagged objects, grid sensors, angle of arrival (AoA), time of arrival (ToA), received signal strength indication (RSSI), and the like. Some existing systems use an enhanced Wi-Fi infrastructure to provide location information. However, Wi-Fi signal strength measurements tend to be extremely noisy, which requires the use of filters to improve accuracy.

To address these and other issues, the embodiments disclosed herein provide systems and methods for seamlessly integrating static venue map data with dynamic data, such as vehicle position or route information, to prevent collisions in an indoor or enclosed space. Some of the disclosed embodiments enable the remote control and operation of smart safety alerting devices to emit alerts in the form of lights, sounds, or wireless signals. The smart alerting devices can include, but are not limited to, convex mirrors that are often found at corners and intersections in driveways and parking structures. While some of the disclosed embodiments are described in the context of an enclosed parking structure, it will be understood that the principles described herein can be applied in other scenarios, including industrial plants, warehouses, medical or educational campuses, and the like, as well as in outdoor environments, such as parking lots or uncovered parking structures.

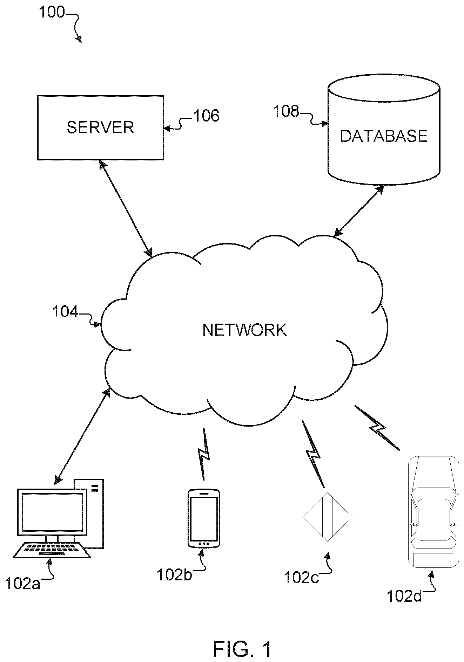

FIG. 1 illustrates an example system 100 for use in the prevention of indoor vehicle collisions according to this disclosure. As shown in FIG. 1, the system 100 includes multiple computing devices 102a-102d, at least one network 104, at least one server 106, and at least one database 108. Note, however, that other combinations and arrangements of components may also be used here.

In this example, each computing device 102a-102d is coupled to or communicates over the network 104. Communications between or involving each computing device 102a-102d and the network 104 may occur in any suitable manner, such as via a wired or wireless connection. Each computing device 102a-102d represents any suitable device or system capable of providing information to the server 106 or database 108 or to receive information from the server 106 or database 108. Example types of information may include vehicle identification information, location information, venue map data, route information, alert instructions, and the like. Any suitable number(s) and type(s) of computing devices 102a-102d may be used in the system 100. In this particular example, the computing device 102a represents a desktop computer, the computing device 102b represents a smartphone computer, the computing device 102c represents a sensing device (e.g., a proximity sensor), and the computing device 102d represents a computer onboard a vehicle (e.g., an automobile). However, any other or additional types of computing devices may be used in the system 100, such as a smart video display screen, a loudspeaker, other types of sensors, and the like. Each computing device 102a-102d includes any suitable structure configured to transmit and/or receive information.

The network 104 facilitates communication between various components of the system 100. For example, the network 104 may communicate Internet Protocol (IP) packets, frame relay frames, Asynchronous Transfer Mode (ATM) cells, or other suitable information between network addresses. The network 104 may include one or more local area networks (LANs), metropolitan area networks (MANs), wide area networks (WANs), all or a portion of a global network such as the Internet, or any other communication system or systems at one or more locations. The network 104 may also operate according to any appropriate communication protocol or protocols.

The server 106 is coupled to the network 104 and is coupled to or otherwise communicates with the database 108. The server 106 supports the retrieval of information from the database 108 and the processing of that information. Of course, the database 108 may also be used within the server 106 to store information, in which case the server 106 may store the information itself. Among other things, the server 106 processes information for the prevention of indoor vehicle collisions. The server 106 includes any suitable structure configured to process information for the prevention of indoor vehicle collisions. In some embodiments, the server 106 includes one or more processors, one or more memories, and one or more communication interfaces. Note, however, that the server 106 may be implemented in any suitable manner to perform the described functions. Also note that while described as a server here, the device(s) actually implementing the server 106 may represent one or more desktop computers, laptop computers, server computers, or other computing or data processing devices or systems.

The database 108 stores various information used, generated, or collected by the server 106 and the computing devices 102a-102d. For example, the database 108 may store vehicle identification information, location information, venue map data, route information, alert instructions, and the like. The database 108 may support any suitable technique for storing and retrieving information.

Note that there are a number of possible ways to implement the system 100 in order to provide the described functionality for the prevention of indoor vehicle collisions. For example, in some embodiments, the server 106 and database 108 are owned, operated, or managed by a common entity. In other embodiments, the server 106 and database 108 are owned, operated, or managed by different entities. However, this disclosure is not limited to any particular organizational implementation.

Although FIG. 1 illustrates one example of a system 100 for use in the prevention of indoor vehicle collisions, various changes may be made to FIG. 1. For example, the system 100 may include any number of computing devices 102a-102d, networks 104, servers 106, and databases 108. Also, while FIG. 1 illustrates that one database 108 is coupled to the network 104, any number of databases 108 may reside at any location or locations accessible by the server 106, and each database 108 may be coupled directly or indirectly to the server 106. In addition, while FIG. 1 illustrates one example operational environment for use in the prevention of indoor vehicle collisions, this functionality may be used in any other suitable system.

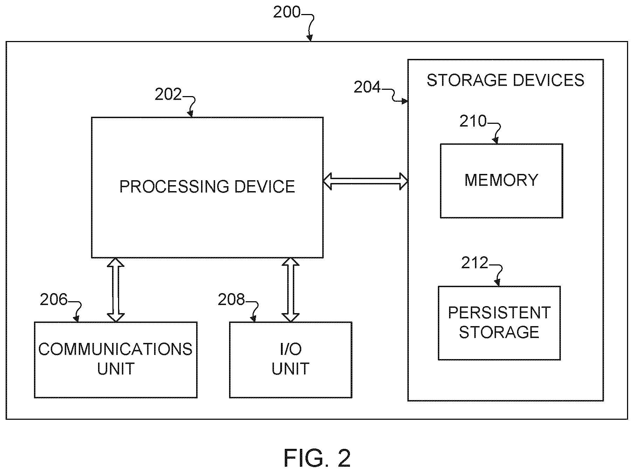

FIG. 2 illustrates an example device 200 for use in the prevention of indoor vehicle collisions according to this disclosure. One or more instances of the device 200 may, for example, be used to at least partially implement the functionality of the server 106 of FIG. 1. However, the functionality of the server 106 may be implemented in any other suitable manner. Also, the same or similar arrangement of components may be used to at least partially implement the functionality of one or more of the computing devices 102a-102d in FIG. 1. However, the functionality of each computing device 102a-102d may be implemented in any other suitable manner.

As shown in FIG. 2, the device 200 denotes a computing device or system that includes at least one processing device 202, at least one storage device 204, at least one communications unit 206, and at least one input/output (I/O) unit 208. The processing device 202 may execute instructions that can be loaded into a memory 210. The processing device 202 includes any suitable number(s) and type(s) of processors or other devices in any suitable arrangement. Example types of processing devices 202 include one or more microprocessors, microcontrollers, digital signal processors (DSPs), application specific integrated circuits (ASICs), field programmable gate arrays (FPGAs), or discrete circuitry.

The memory 210 and a persistent storage 212 are examples of storage devices 204, which represent any structure(s) capable of storing and facilitating retrieval of information (such as data, program code, and/or other suitable information on a temporary or permanent basis). The memory 210 may represent a random access memory or any other suitable volatile or non-volatile storage device(s). The persistent storage 212 may contain one or more components or devices supporting longer-term storage of data, such as a read only memory, hard drive, Flash memory, or optical disc.

The communications unit 206 supports communications with other systems or devices. For example, the communications unit 206 can include a network interface card or a wireless transceiver facilitating communications over a wired or wireless network, such as the network 104. The communications unit 206 may support communications through any suitable physical or wireless communication link(s).

The I/O unit 208 allows for input and output of data. For example, the I/O unit 208 may provide a connection for user input through a keyboard, mouse, keypad, touchscreen, or other suitable input device. The I/O unit 208 may also send output to a display, printer, or other suitable output device. Note, however, that the I/O unit 208 may be omitted if the device 200 does not require local I/O, such as when the device 200 can be accessed remotely.

In some embodiments, the instructions executed by the processing device 202 can include instructions that implement the functionality of the server 106 described above. For example, the instructions executed by the processing device 202 can include instructions for preventing indoor vehicle collisions.

Although FIG. 2 illustrates one example of a device 200 for use in the prevention of indoor vehicle collisions, various changes may be made to FIG. 2. For example, computing devices and systems come in a wide variety of configurations, and FIG. 2 does not limit this disclosure to any particular computing device or system.

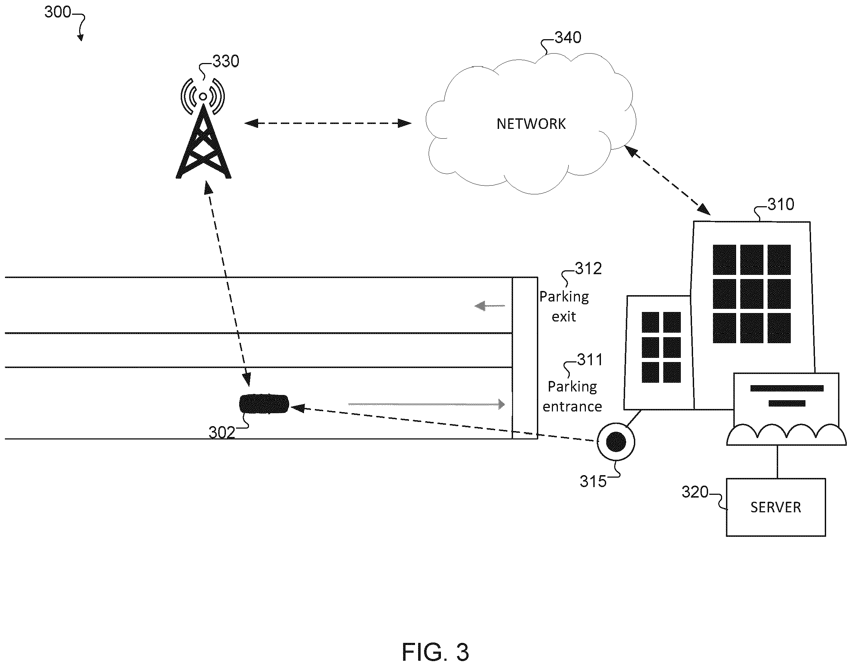

FIG. 3 illustrates an example environment 300 in which techniques for the prevention of indoor vehicle collisions can be used according to this disclosure. For ease of explanation, the environment 300 of FIG. 3 may be described as including one or more components of FIG. 1 or FIG. 2. However, the environment 300 may involve the use of any suitable device(s) in any suitable system(s).

As shown in FIG. 3, the environment 300 includes a vehicle 302 (e.g., an autonomous or driver-operated automobile) that is moving outdoors and is approaching an enclosed space 310, such as a building or a parking structure. In some embodiments, the enclosed space 310 can represent an indoor parking garage that has a parking entrance 311 and a parking exit 312. In other embodiments, the enclosed space 310 can represent a warehouse, campus building, or any other suitable indoor space.

The enclosed space 310 is associated with one or more communicating devices 315. Each communicating device 315 represents any suitable device that is capable of communicating information with another device or system. For example, one or more communicating devices 315 can include a base station, access point, or terminal device for cellular, Wi-Fi, or Dedicated Short Range Communications (DSRC) communications. As another example, one or more communicating devices 315 can include a sensor that detects or measures information and communicates the information to another device or system. Depending on the embodiment, communicating devices 315 can be disposed in various locations in or around the enclosed space 310. For example, a communicating device 315 can be a sensor (e.g., a proximity sensor, an RF reader, a camera, or the like) disposed at or near the parking entrance 311 or the parking exit 312 and capable of sensing or detecting information about the vehicle 302. As another example, a communicating device 315 can be a display disposed near driving paths in the enclosed space 310 for showing information to the vehicle 302 or its occupants.

The enclosed space 310 is also associated with a server 320. In the environment 300, the server 320 is configured to receive, process, and send information associated with devices, activities, and events that occur in conjunction with the enclosed space 310. In particular, the server 320 collects and processes information associated with location and movement of the vehicle 302 within the enclosed space 310. For example, the server 320 can receive information about the vehicle 302 that is detected by one communicating device 315 (e.g., a sensor), process the information, and send other information to another communicating device 315 (e.g., a display or warning light) for displaying to the vehicle 302. Examples of information received or sent by the server 320 include venue map data, dynamic parking data, safety device data, and the like. Some of the information can be used for the prevention of an indoor collision involving the vehicle 302. As a particular example, the server 320 can receive identification information of the vehicle 302, determine a route of the vehicle 302 with the enclosed space 310, determine that a collision involving the vehicle 302 may occur based on the location and movement of the vehicle 302, and instruct a communicating device 315 to emit an alert to prevent the collision.

In some embodiments, the server 320 is disposed at or near the enclosed space 310 and can represent a server that is owned or operated by a management entity of the enclosed space 310. In some embodiments, the server 320 is disposed in a location that is remote from the enclosed space 310. In some embodiments, the server 320 is owned or operated by another entity, such as a location services or mapping services provider. Further details of operations of the server 320 are provided below in conjunction with other figures. The server 320 represents any suitable computing device that is capable of receiving, processing, and sending information associated with devices, activities, and events that occur in conjunction with the enclosed space 310. In some embodiments, the server 320 represents (or is represented by) the server 106 of FIG. 1.

While the vehicle 302 is still outdoors, the vehicle 302 can communicate with a base station 330. The base station 330 facilitates wireless communication with the vehicle 302, such as over a cellular or Wi-Fi network. The base station 330 is communicatively coupled to a network 340, which can include any suitable wireless or wired network, such as the internet, a cellular network, a Wi-Fi network, and the like. In some embodiments, the network 340 represents (or is represented by) the network 104 of FIG. 1. As shown in FIG. 3, the network 340 and the base station 330 provide a communication path for information to be transmitted between the enclosed space 310 and the vehicle 302.

In FIG. 3, the vehicle 302 is represented as a passenger vehicle, such as an automobile, a truck, or the like. Such passenger vehicles are typically operated by a driver and may also include one or more non-driving passengers. However, this is merely one example type of vehicle, and this disclosure is not limited thereto. In some embodiments, the vehicle 302 can be an autonomous vehicle that does not have a human driver or a passenger. In some embodiments, the vehicle 302 can be a robotic device that operates within a warehouse environment, industrial environment, or any other suitable environment.

As described herein, the environment 300 provides a system in which real time indoor venue map data can be combined with location data of the vehicle 302 to enable the tracking and routing of the vehicle 302 as the vehicle 302 moves within the enclosed space 310. Vehicle tracking can be performed to prevent indoor collisions involving the vehicle 302, to ensure the vehicle 302 follows a predetermined route, or both. In some embodiments, safety devices within the enclosed space 310 (e.g., positioned along the driving route of the vehicle 302) can be controlled to emit alerts to prevent collisions, guide the vehicle 302, or provide other information.

The venue map data and vehicle location data can be communicated throughout the environment 300 via the base station 330 using cellular technology (e.g., 3G/4G/5G), or via one or more communicating devices 315 using other wireless communication technology, such as Wi-Fi or DSRC in broadcasting mode. As known in the art, DSRC operates in the 5.9 GHz band with 75 MHz of allocated spectrum to enable vehicle safety and mobility applications. As the name suggests, DSRC mainly provides communication in a range from hundreds of meters up to 1km distance. Unlike cellular networks, DSRC can be used for broadcasting information to all vehicles in a given communication range. Vehicles equipped with a DSRC receiver can receive such broadcast information.

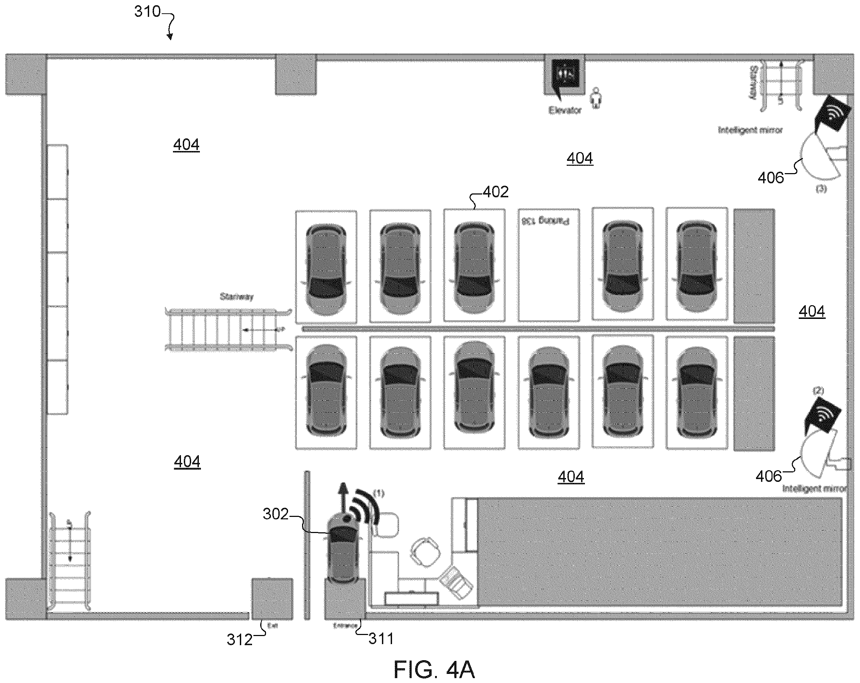

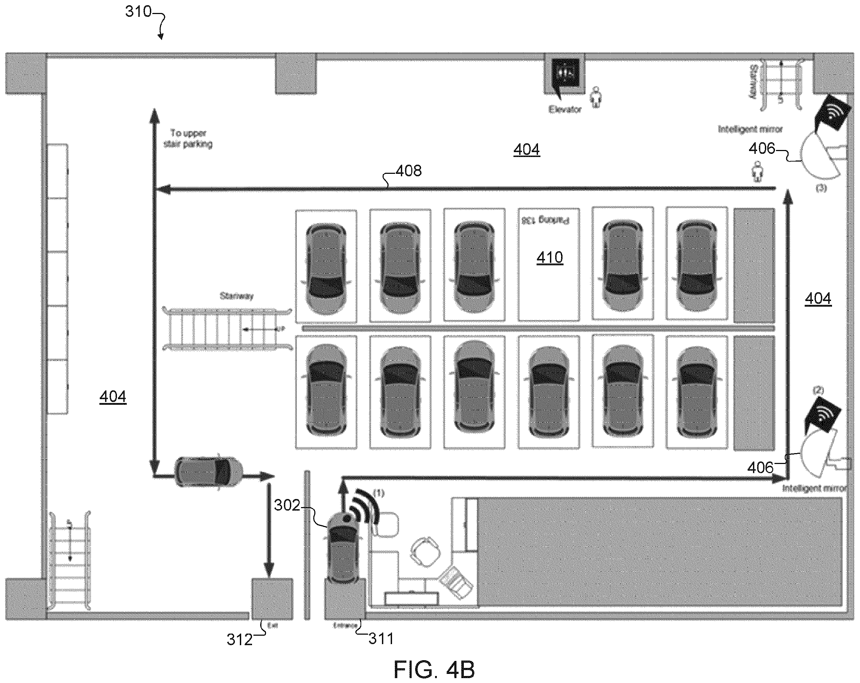

FIGS. 4A and 4B illustrate additional details of the enclosed space 310 of FIG. 3 according to this disclosure. As shown in FIG. 4A, the enclosed space 310 is represented as an indoor parking structure that includes multiple parking spaces 402 for vehicles and multiple paths 404 in which the vehicle 302 can move. The enclosed space 310 can also include various features typical for a parking structure, including one or more stairways, elevators, offices, pedestrians, and the like. In addition, the enclosed space 310 includes multiple safety devices 406 disposed at different locations within the enclosed space 310, such as at corners of the paths 404. Such locations are often blind spots where visibility is reduced and the potential for collisions is higher.

In FIG. 4A, the vehicle 302 has entered the enclosed space 310 through the parking entrance 311. Prior to the vehicle 302 entering the enclosed space 310, the location and driving path of the vehicle 302 can be determined and tracked using one or more location technologies, such as GPS, sensors, map matching techniques, and the like. The location and driving path of the vehicle 302 can also take into account any road network topology information that is available in the vehicle 302.

As the vehicle 302 approaches or enters the parking entrance 311, the vehicle 302 can be identified, and the identification information can be provided to the server 320. There are a number of methods by which the vehicle 302 can be identified. For example, a communicating device 315 having a camera can capture an image of the license plate number, identification label, or vehicle identification number (VIN) tag of the vehicle 302. In some embodiments, the identification label can include a barcode or QR code that are readable by the communicating device 315. As another example, a communicating device 315 having a wireless receiver can detect a signal transmitted by a garage door opener or gate opener activated at the vehicle 302. As yet another example, a communicating device 315 having an RF reader can read an RFID tag or highway toll tag associated with the vehicle 302. In some embodiments, a communicating device 315 can detect or receive information from a personal communication device of an occupant of the vehicle 302. For example, the driver of the vehicle 302 may show an image (e.g., a bar code) on the driver's mobile phone that identifies the driver or the vehicle 302. In some embodiments, the identification information can include an indoor parking request provided by the vehicle 302 or the driver of the vehicle 302.

The identification information can be sent to the server 320, and the server 320 can process the information as needed. In some embodiments, the server 320 can use the identification information to determine if the vehicle 302 is authorized to enter or park within the enclosed space 310. In some embodiments, the server 320 can use the identification information to determine a route for the vehicle 302 within the enclosed space 310, based on a predetermined destination associated with the vehicle 302. For example, FIG. 4B shows a route 408 for the vehicle 302 to take through the enclosed space 310. In this example, the route 408 directs the vehicle 302 to a predetermined parking location on an upper level and then to the parking exit 312 at a later time. For this example, the vehicle 302 may be identified as an expected delivery vehicle and the predetermined parking location may correspond to a location where the delivery can be made. As another example, a route 408 may direct the vehicle 302 to an assigned parking space 410 on the current level. As yet another example, in a warehouse environment, the vehicle 302 may be an autonomous robot carrying materials or supplies, and the route 408 directs the robot to a predetermined delivery point for the materials or supplies.

The route 408 can be determined by the server 320 using venue map data associated with the enclosed space 310. The venue map data may be precached offline or online, and can be rendered in one or more map layers. The venue map data can include various types of mapping or location information that can be used by the vehicle 302 or another device or component in the enclosed space 310. For example, the venue map data can include route information for the vehicle 302 through the enclosed space 310 to its destination or to the parking exit 312. As another example, the venue map data can include route information that can be displayed on a visual map in the vehicle 302 or can be used only in data form. As yet another example, the venue map data can include updates of risks, obstacles, changes in environment, or other nearby vehicles or people while the vehicle 302 moves within the enclosed space 310, such as along the route 408. In some embodiments, a communication connection between the vehicle 302 and the server 320 can be established, and the server 320 can send the venue map data or other information associated with the route 408 to the vehicle 302 for the vehicle 302 to follow. For example, when the vehicle 302 is an autonomous vehicle, the venue map data can be transmitted to the vehicle 302 to assist an autonomous driving operation of the vehicle 302. In some cases, the server 320 may not be able to determine a route 408 for the vehicle 302. For example, if the vehicle 302 is unexpected or unknown, a destination for the vehicle 302 may not be known in advance, and a route 408 cannot be determined.

Once the identity of the vehicle 302 or the driver is determined, the location of the vehicle 302 can be tracked and recorded as the vehicle 302 moves within the enclosed space 310, e.g., along the route 408. For example, one or more communicating devices 315 with position sensors (or other types of sensors) can detect the location of the vehicle 302 and send location information to the server 320 for tracking and processing. As another example, one or more of the safety devices 406 can detect the location of the vehicle 302 and send location information to the server 320.

Each safety device 406 can be configured for wired or wireless communication with the server 320, other safety devices 406, the vehicle 302, other devices in the enclosed space 310, or a combination of these. In particular, each safety device 406 can receive or send commands, data, or other information to or from the server 320, the vehicle 302, or another device. In some embodiments, at least one of the safety devices 406 can be a convex safety mirror, similar to those that are often found at corners and intersections in driveways and parking structures. Other safety devices 406 can include an electronic sign, a display screen, a loudspeaker, or a combination of these. In the enclosed space 310, each safety device 406 can be configured with a remote wireless control module capable of receiving control command instructions and sending information (e.g., location information of the vehicle 302 and other nearby people and devices) to the server 320.

In some embodiments, one or more safety devices 406 can be controlled by the server 320 to detect safety risks (e.g., possible collisions, obstacles in the vehicle path, and the like) or unauthorized movements through video monitoring or other detection methods. For example, a safety device 406 can detect that the vehicle 302 may collide with a nearby pedestrian that is at or near the route 408. As another example, the safety device 406 can detect that the vehicle 302 may collide with a parked vehicle or a wall when the vehicle 302 is moving toward the parked vehicle or wall. Because the safety device 406 may be disposed in a corner or blind spot, the safety device 406 may be better able to detect a possible collision than the vehicle 302 itself can. As yet another example, instead of a possible collision, the safety device 406 can detect that the vehicle 302 is moving away from its designated route 408. In some embodiments, the safety device 406 merely collects location information about safety risks or unauthorized movements and sends the information to the server 320, and the server 320 uses the information to make the determination that a safety risk or unauthorized movement has occurred.

Each safety device 406 can also be configured to emit an alert to the vehicle 302, the driver of the vehicle 302, or any nearby pedestrians in the event that a possible collision or unauthorized movement is detected. In some embodiments, the alert is a visual or audible alert for alerting a driver of the vehicle 302 or a pedestrian near the vehicle 302. For example, the alert could include the safety device 406 blinking, flashing brightly, changing color, or sounding an alarm sound. In some embodiments, the alert is an electronic message, and the safety device 406 is instructed to emit the alert by wireless transmission to the vehicle 302 or a personal mobile device, such as a mobile phone. The alert is emitted to cause the vehicle 302, the driver of the vehicle 302, or the nearby pedestrians to stop or change course in order to prevent the collision or unauthorized movement. In embodiments in which the vehicle 302 is an autonomous vehicle, the alert can be used to enable or disable an autonomous driving operation of the vehicle 302 based on a determination that the vehicle 302 is about to collide with an object or a person.

If information regarding the intended route 408 of the vehicle 302 is available, the server 320 can control or enable one or more safety devices 406 along the route 408, while not actively controlling other safety devices 406 that are not along the route 408. For example, safety devices 406 within a threshold distance in front of the vehicle 302's current position could be illuminated one at a time as the vehicle 302 progresses along the route 408, in order to guide the vehicle 302. Conversely, if information regarding the intended route 408 of the vehicle 302 is not available, the server 320 can determine which safety device(s) 406 are located within a predetermined threshold distance from the vehicle 302's current position. Then the server 320 can control or enable only those safety devices 406 in order to detect a possible collision or unauthorized movement.

In some embodiments, information obtained (e.g., by the communicating devices 315, the safety devices 406, etc.) about the vehicle 302 and its movement path within the enclosed space 310 can be continuously or regularly sent to the server 320 for archiving. Later, this information can be used for data analysis, such as to develop better venue map data.

Although FIGS. 3, 4A, and 4B illustrate an example environment 300 in which techniques for the prevention of indoor vehicle collisions can be used, various changes may be made to these figures. For example, environments involving vehicles, enclosed spaces, and electronic communication of information can include a wide variety of components arranged in many possible configurations, and FIGS. 3, 4A, and 4B do not limit the scope of this disclosure.

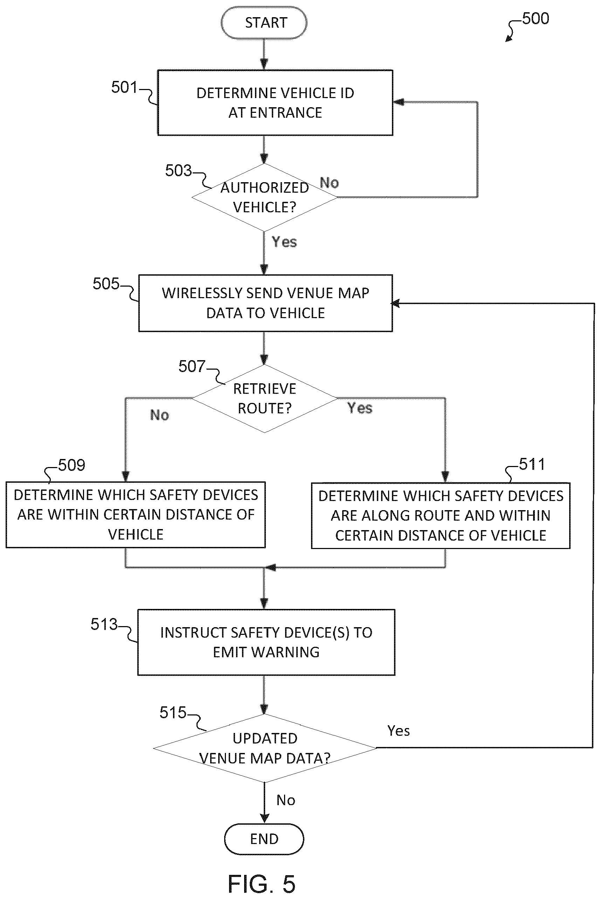

FIG. 5 illustrates an example method 500 for preventing indoor vehicle collisions according to this disclosure. For ease of explanation, the method 500 may be described as being performed in the environment 300 of FIG. 3. For example, some of operations of FIG. 5 may be performed by the server 320. However, the method 500 may involve the use of any suitable device(s) in any suitable environment(s).

At step 501, vehicle identification information is determined at or near an entrance to a space within a structure or a building. This can include, for example, a communication device (e.g., a sensor) detecting or reading identification information from the vehicle 302 as the vehicle 302 enters the parking entrance 311, and providing the vehicle identification information to the server 320 (e.g., by wireless or wired transmission).

At step 503, it is determined whether or not the vehicle is authorized. This can include, for example, the server 320 comparing the identification information from the vehicle 302 to a database having authorized vehicle information. If the vehicle is not authorized, then the method 500 returns to step 501 to determine vehicle identification again, in case the vehicle was incorrectly identified. If the vehicle is authorized, then the method 500 proceeds to step 505.

At step 505, venue map data is wirelessly sent to the vehicle. This can include, for example, the server 320 sending venue map data to the vehicle 302 (e.g., via a communicating device 315). The venue map data can be used by the vehicle 302 to enable or guide movement of the vehicle 302 within the enclosed space 310. In particular, when the vehicle 302 is an autonomous vehicle, the venue map data can assist an autonomous driving operation of the autonomous vehicle.

At step 507, retrieval of route information is attempted. This can include, for example, the server 320 determining if a route 408 is known for the vehicle 302 within the enclosed space 310. If the route information is not retrieved, then the method 500 proceeds to step 509. If the route information is retrieved, then the method 500 proceeds to step 511.

At step 509, it is determined which safety devices are within a certain threshold distance of the vehicle. This can include, for example, the server 320 determining which safety devices 406 are located within a predetermined threshold distance from a current position of the vehicle 302.

At step 511, it is determined which safety devices are along the route of the vehicle and are within a certain threshold distance of the vehicle. This can include, for example, the server 320 determining which safety devices 406 are located along the route 408 and are within a predetermined threshold distance from a current position of the vehicle 302.

At step 513, one or more of the safety devices determined in step 509 or 511 are instructed to emit an alert or warning. In some embodiments, the alert is a visual or audible alert for alerting a driver of the vehicle or a person near the vehicle. In some embodiments, the alert is an electronic message, and the safety device is instructed to emit the alert by wireless transmission to the vehicle or a personal mobile device. This can include, for example, one or more of the safety devices 406 emitting an alert that can be received and interpreted by the vehicle 302, a driver of the vehicle 302, or a person near the vehicle 302.

At step 515, it is determined whether or not there is updated venue map data based on a new location of the vehicle. This can include, for example, the server 320 determining that the vehicle 302 has moved to a new location, and identifying new or updated venue map data that corresponds to the new location of the vehicle 302. For example, if the enclosed space 310 is a multi-level parking structure and the vehicle 302 moves to a new level, the server 320 can identify updated venue map data associated with the new level where the vehicle 302 is now located. The updated venue map data can include updates of risks, obstacles, changes in environment, or other nearby vehicles or people. If there is updated venue map data, then the method 500 returns to step 505 for sending the updated venue map data to the vehicle 302. If there is no updated venue map data, then the method 500 ends.

Although FIG. 5 illustrates one example of a method 500 for preventing indoor vehicle collisions, various changes may be made to FIG. 5. For example, while shown as a series of steps, various steps in FIG. 5 may overlap, occur in parallel, occur in a different order, or occur any number of times. Also, one or more steps could be added to the method 500, and one or more steps could be removed from the method 500.

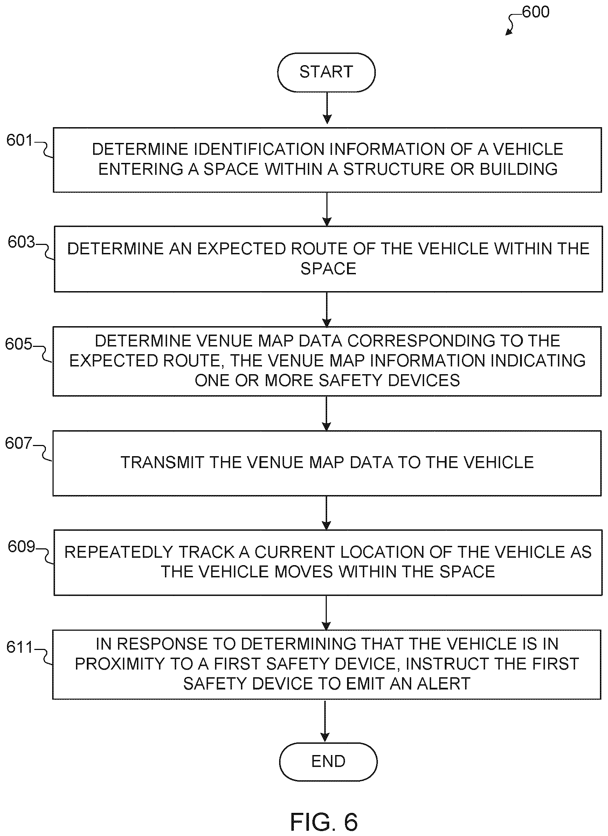

FIG. 6 illustrates an example method 600 for generating an alert in response to vehicle movement according to this disclosure. For ease of explanation, the method 600 of FIG. 6 may be described as being performed in the environment 300 of FIG. 3. For example, some of operations of FIG. 6 may be performed by the server 320. However, the method 600 may involve the use of any suitable device(s) in any suitable environment(s).

At step 601, identification information is determined of a vehicle entering a space within a structure or building. This can include, for example, a communication device (e.g., a sensor) detecting or reading identification information from the vehicle 302 as the vehicle 302 enters the parking entrance 311, and providing the vehicle identification information to the server 320 (e.g., by wireless or wired transmission).

At step 603, an expected route of the vehicle within the space is determined. In some embodiments, the expected route of the vehicle is determined based on a predetermined destination of the vehicle within the space. This can include, for example, the server 320 processing the identification information from the vehicle 302, determining the destination of the vehicle 302 based on its identification information, and determining a route 408 for the vehicle 302 to get to the destination.

At step 605, venue map data corresponding to the expected route is determined. The venue map data indicates one or more safety devices disposed at one or more locations along or near the expected route. This can include, for example, the server 320 correlating the route 408 with a database of venue map data for the enclosed space 310 in order to determine one or more safety devices 406 along the route 408. In some embodiments, the venue map data is determined by identifying the venue map data based on location information of the vehicle, and then extracting the venue map data from a database. In some embodiments, at least one of the one or more safety devices comprises at least one of a traffic mirror, an electronic sign, a display screen, or a loudspeaker.

At step 607, the venue map data is transmitted to the vehicle. The venue map data is configured to assist the vehicle or a driver of the vehicle to follow the expected route. This can include, for example, the server 320 sending venue map data to the vehicle 302 (e.g., via a communicating device 315).

At step 609, a current location of the vehicle is repeatedly tracked as the vehicle moves within the space. This can include, for example, the server 320 repeatedly receiving location information of the vehicle 302 from one or more communicating devices 315, safety devices 406, or a combination of these, as the vehicle 302 moves within the enclosed space 310.

At step 611, a first safety device among the safety devices is instructed to emit an alert. The instruction is in response to determining that the vehicle is in proximity to the first safety device. In some embodiments, the alert is a visual or audible alert for alerting a driver of the vehicle or a person near the vehicle. In some embodiments, the alert is an electronic message, and the first safety device is instructed to emit the alert by wireless transmission to the vehicle or a personal mobile device. In some embodiments, the first safety device is instructed to emit the alert further in response to determining that the vehicle is about to collide with an object or a person. In some embodiments, the first safety device is instructed to emit the alert further in response to determining that the vehicle is deviating from the expected route. This can include, for example, one or more of the safety devices 406 emitting an alert that can be received and interpreted by the vehicle 302, a driver of the vehicle 302, or a person near the vehicle 302.

Although FIG. 6 illustrates one example of a method 600 for generating an alert in response to vehicle movement, various changes may be made to FIG. 6. For example, while shown as a series of steps, various steps in FIG. 6 may overlap, occur in parallel, occur in a different order, or occur any number of times. Also, one or more steps could be added to the method 600, and one or more steps could be removed from the method 600.

In some embodiments, various functions described in this patent document are implemented or supported by a computer program that is formed from computer readable program code and that is embodied in a computer readable medium. The phrase "computer readable program code" includes any type of computer code, including source code, object code, and executable code. The phrase "computer readable medium" includes any type of medium capable of being accessed by a computer, such as read only memory (ROM), random access memory (RAM), a hard disk drive, a compact disc (CD), a digital video disc (DVD), or any other type of memory. A "non-transitory" computer readable medium excludes wired, wireless, optical, or other communication links that transport transitory electrical or other signals. A non-transitory computer readable medium includes media where data can be permanently stored and media where data can be stored and later overwritten, such as a rewritable optical disc or an erasable storage device.

## Claims

1. A computer-implemented method comprising:
determining identification information of a vehicle (302) entering a space (310) within a structure or a building;
determining an intended route (408) of the vehicle within the space;
determining venue map data corresponding to the intended route, the venue map data indicating one or more safety devices (315, 406) disposed at one or more predefined locations, within the structure or the building, along the intended route;
receiving information regarding a current location of the vehicle, the information being detected by the one or more safety devices;
repeatedly tracking a current location of the vehicle as the vehicle moves within the space;
controlling the one or more safety devices to guide the vehicle to follow the intended route using the venue map data and the tracked location of the vehicle by, in response to determining that the vehicle is in proximity to a first safety device of the one or more safety devices, instructing the first safety device to emit an alert, wherein the first safety device is in front of the vehicle.

2. The method of Claim 1, wherein the vehicle is an autonomous vehicle, the method further comprising:
transmitting the venue map data to the autonomous vehicle, the venue map data configured to assist an autonomous driving operation of the autonomous vehicle.

3. The method of Claim 2, wherein the autonomous driving operation of the autonomous vehicle is enabled or disabled based on a determination that the autonomous vehicle is about to collide with an object or a person.

4. The method of Claim 1, wherein determining the venue map data comprises:
identifying the venue map data based on location information of the vehicle; and extracting the venue map data from a database (108).

5. The method of Claim 1, wherein the first safety device is instructed to emit the alert further in response to determining that the vehicle is deviating from the intended route.

6. The method of Claim 1, wherein the alert is a visual or audible alert for alerting a driver of the vehicle.

7. The method of Claim 1, wherein the alert is an electronic message, and the first safety device is instructed to emit the alert by wireless transmission to the vehicle or a personal mobile device of the driver of the vehicle.

8. The method of Claim 1, wherein the intended route of the vehicle is determined based on a predetermined destination of the vehicle within the space.

9. The method of Claim 1, further comprising:
transmitting the venue map data to the vehicle, the venue map data configured to assist the vehicle or a driver of the vehicle to follow the intended route.

10. The method of Claim 1, wherein at least one of the one or more safety devices comprises at least one of a traffic mirror, an electronic sign, a display screen, or a loudspeaker.

11. A system (200) comprising:
at least one memory (210) configured to store instructions; and
at least one processor (202) coupled to the at least one memory and configured when executing the instructions to perform the method of claim 1.

12. The system of claim 11, wherein the processor is further configured when executing the instructions to perform the method of any of claims 5 to 10.

13. A non-transitory computer readable medium containing instructions that when executed cause at least one processor to perform the method of claim 1.

## Patentansprüche

1. Computerimplementiertes Verfahren, umfassend:
Bestimmen von Identifizierungsinformationen eines Fahrzeugs (302), welches in einen Raum (310) innerhalb der Struktur eines Gebäudes eintritt;
Bestimmen einer vorgesehenen Route (408) des Fahrzeugs innerhalb des Raums;
Bestimmen von Ortskartendaten, welche der vorgesehenen Route entsprechen, wobei die Ortskartendaten eine oder mehrere Sicherheitsvorrichtungen (315, 406) bezeichnen, welche sich an einem oder mehreren vordefinierten Standorten innerhalb der Struktur des Gebäudes entlang der Route befinden;
Empfangen von Informationen in Bezug auf einen aktuellen Standort des Fahrzeugs, wobei die Informationen von der einen oder den mehreren Sicherheitsvorrichtungen erfasst werden;
wiederholtes Verfolgen eines aktuellen Standorts des Fahrzeugs, während sich das Fahrzeug innerhalb des Raums bewegt;
Steuern der einen oder mehreren Sicherheitsvorrichtungen, um das Fahrzeug so zu leiten, dass es unter Verwendung der Ortskartendaten und des verfolgten Standorts des Fahrzeugs der vorgesehenen Route folgt, durch Anweisen der ersten Sicherheitsvorrichtung als Reaktion auf Bestimmen, dass sich das Fahrzeug in der Nähe der ersten Sicherheitsvorrichtung der einen oder mehreren Sicherheitsvorrichtungen befindet, einen ersten Alarm auszugeben, wobei sich die erste Sicherheitsvorrichtung vor dem Fahrzeug befindet.

2. Verfahren nach Anspruch 1, wobei das Fahrzeug ein autonomes Fahrzeug ist, wobei das Verfahren weiter umfasst:
Übertragen der Ortskartendaten an das autonome Fahrzeug, wobei die Ortskartendaten dazu konfiguriert sind, einen autonomen Fahrbetrieb des autonomen Fahrzeugs zu unterstützen.

3. Verfahren nach Anspruch 2, wobei der autonome Fahrbetrieb des autonomen Fahrzeug auf Basis einer Bestimmung, dass das autonome Fahrzeug in Begriff ist, mit einem Objekt oder einer Person zu kollidieren, aktiviert oder deaktiviert wird.

4. Verfahren nach Anspruch 1, wobei Bestimmen der Ortskartendaten umfasst:
Identifizieren der Ortskartendaten auf Basis von Standortinformationen des Fahrzeugs; und Extrahieren der Ortskartendaten aus einer Datenbank (108).

5. Verfahren nach Anspruch 1, wobei die erste Sicherheitsvorrichtung dazu angewiesen ist, den Alarm weiter als Reaktion auf Bestimmen auszugeben, dass das Fahrzeug von der vorgesehenen Route abweicht.

6. Verfahren nach Anspruch 1, wobei der Alarm ein visueller oder akustischer Alarm zum Alarmieren eines Fahrers des Fahrzeugs ist.

7. Verfahren nach Anspruch 1, wobei der Alarm eine elektronische Nachricht ist, und die erste Sicherheitsvorrichtung angewiesen ist, den Alarm durch drahtlose Übertragung an das Fahrzeug oder eine persönliche mobile Vorrichtung des Fahrers des Fahrzeugs auszugeben.

8. Verfahren nach Anspruch 1, wobei die vorgesehene Route des Fahrzeugs auf Basis eines vorbestimmten Ziels des Fahrzeugs innerhalb des Raums bestimmt wird.

9. Verfahren nach Anspruch 1, weiter umfassend:
Übertragen der Ortskartendaten an das Fahrzeug, wobei die Ortskartendaten konfiguriert sind, das Fahrzeug oder einem Fahrer des Fahrzeugs beim Folgen der vorgesehenen Route zu unterstützen.

10. Verfahren nach Anspruch 1, wobei zumindest eine der einen oder mehreren Sicherheitsvorrichtungen zumindest eines von einem Verkehrsspiegel, einem elektronischen Zeichen, einem Anzeigebildschirm, oder einem Lautsprecher umfasst.

11. System (200), umfassend:
zumindest einen Speicher (210), welcher dazu konfiguriert ist, Anweisungen zu speichern; und
zumindest einen Prozessor (202), welcher mit dem zumindest einen Speicher gekoppelt und dazu konfiguriert ist, beim Ausführen der Anweisungen das Verfahren nach Anspruch 1 durchzuführen.

12. System nach Anspruch 11, wobei der Prozessor weiter dazu konfiguriert ist, beim Ausführen der Anweisungen das Verfahren nach einem der Ansprüche 5 bis 10 auszuführen.

13. Nichtflüchtiges, computerlesbares Medium, welches Anweisungen enthält, welche, wenn ausgeführt, zumindest einen Prozessor veranlassen, das Verfahren nach Anspruch 1 auszuführen.

## Revendications

1. Procédé mis en œuvre par ordinateur comprenant :
la détermination d'informations d'identification d'un véhicule (302) entrant dans un espace (310) à l'intérieur d'une structure ou d'un bâtiment ;
la détermination d'un itinéraire prévu (408) du véhicule à l'intérieur de l'espace ;
la détermination de données de carte de lieu correspondant à l'itinéraire prévu, les données de carte de lieu indiquant un ou plusieurs dispositifs de sécurité (315, 406) disposés à un ou plusieurs emplacements prédéfinis, à l'intérieur de la structure ou du bâtiment, le long de l'itinéraire prévu ;
la réception d'informations relatives à un emplacement courant du véhicule, les informations étant détectées par les un ou plusieurs dispositifs de sécurité ;
le suivi répété d'un emplacement courant du véhicule pendant que le véhicule se déplace à l'intérieur de l'espace ;
la commande des un ou plusieurs dispositifs de sécurité pour guider le véhicule pour qu'il suive l'itinéraire prévu à l'aide des données de carte de lieu et de l'emplacement suivi du véhicule par, en réponse à la détermination que le véhicule est à proximité d'un premier dispositif de sécurité parmi les un ou plusieurs dispositifs de sécurité, l'instruction au premier dispositif de sécurité d'émettre une alerte, dans lequel le premier dispositif de sécurité est devant le véhicule.

2. Procédé selon la revendication 1, dans lequel le véhicule est un véhicule autonome, le procédé comprenant en outre :
la transmission des données de carte de lieu au véhicule autonome, les données de carte de lieu étant configurées pour aider une opération de conduite autonome du véhicule autonome.

3. Procédé selon la revendication 2, dans lequel l'opération de conduite autonome du véhicule autonome est activée ou désactivée sur la base d'une détermination que le véhicule autonome est sur le point d'entrer en collision avec un objet ou une personne.

4. Procédé selon la revendication 1, dans lequel la détermination des données de carte de lieu comprend :
l'identification des données de carte de lieu sur la base d'informations d'emplacement du véhicule ; et l'extraction des données de carte de lieu à partir d'une base de données (108).

5. Procédé selon la revendication 1, dans lequel le premier dispositif de sécurité reçoit pour instruction d'émettre l'alerte en outre en réponse à la détermination que le véhicule s'écarte de l'itinéraire prévu.

6. Procédé selon la revendication 1, dans lequel l'alerte est une alerte visuelle ou audible pour alerter un conducteur du véhicule.

7. Procédé selon la revendication 1, dans lequel l'alerte est un message électronique, et il est instruit au premier dispositif de sécurité d'émettre l'alerte par une transmission sans fil au véhicule ou à un dispositif mobile personnel du conducteur du véhicule.

8. Procédé selon la revendication 1, dans lequel l'itinéraire prévu du véhicule est déterminé sur la base d'une destination prédéterminée du véhicule à l'intérieur de l'espace.

9. Procédé selon la revendication 1, comprenant en outre :
la transmission des données de carte de lieu au véhicule, les données de carte de lieu étant configurées pour aider le véhicule ou un conducteur du véhicule à suivre l'itinéraire prévu.

10. Procédé selon la revendication 1, dans lequel au moins l'un des un ou plusieurs dispositifs de sécurité comprend au moins l'un parmi un miroir de circulation, un panneau électronique, un écran d'affichage et un haut-parleur.

11. Système (200) comprenant
au moins une mémoire (210) configurée pour stocker des instructions ; et
au moins un processeur (202) couplé à l'au moins une mémoire et configuré, lors de l'exécution des instructions, pour réaliser le procédé selon la revendication 1.

12. Système selon la revendication 11, dans lequel le processeur est en outre configuré, lors de l'exécution des instructions, pour réaliser le procédé selon l'une quelconque des revendications 5 à 10.

13. Support non transitoire lisible par ordinateur contenant des instructions qui, lorsqu'elles sont exécutées, amènent au moins un processeur à réaliser le procédé selon la revendication 1.
